(19) Europäisches Patentamt / European Patent Office / Office européen des brevets

(11) **EP 4 600 304 A1**

(12) **EUROPEAN PATENT APPLICATION**


(43) Date of publication:
**13.08.2025 Bulletin 2025/33**

(21) Application number: **24156209.9**

(22) Date of filing: **07.02.2024**

(51) International Patent Classification (IPC):
***C08L 67/02*** *(2006.01)*

(52) Cooperative Patent Classification (CPC):
(C-Sets available)
**C08L 67/02** (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**



(71) Applicant: **SHPP Global Technologies B.V.**
**4612 PX Bergen op Zoom (NL)**

(72) Inventors:
- **WANG, Jian**
  **Shanghai (CN)**
- **CHENG, Yunan**
  **Shanghai (CN)**
- **ZHENG, Yun**
  **Shanghai (CN)**

(74) Representative: **Modiano, Gabriella Diana**
**Modiano & Partners SA**
**Steinsdorfstraße 14**
**80538 München (DE)**


(54) **FLAME RETARDANT POLYBUTYLENE TEREPHTHALATE COMPOSITIONS AND ARTICLES**


(57) Thermoplastic compositions include: (a) from about 20 wt% to about 60 wt% of a polybutylene terephthalate (PBT) component; (b) from about 3 wt% to about 30 wt% of a polyetherimide (PEI) component; (c) from about 5 wt% to about 25 wt% of a phosphorous flame retardant (FR) component; and (d) from about 10 wt% to about 50 wt% of a low Dk flat glass fiber. The combined weight percent value of all components does not exceed 100 wt%, and all weight percent values are based on the total weight of the composition. Methods of forming the thermoplastic compositions are also described.


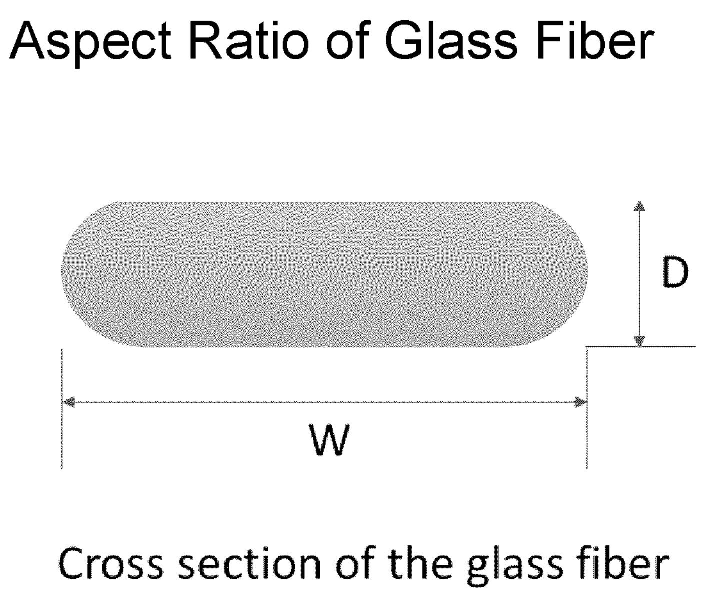


FIG. 1

EP 4 600 304 A1

(52) Cooperative Patent Classification (CPC): (Cont.)

C-Sets
**C08L 67/02, C08K 5/34928, C08K 7/14,**
**C08L 69/005, C08L 79/08;**
**C08L 67/02, C08K 5/5313, C08K 7/14,**
**C08L 69/005, C08L 79/08**

## Description

### FIELD OF THE DISCLOSURE

The present disclosure relates to polybutylene terephthalate (PBT) compositions, and in particular to flame retardant PBT compositions including a phosphorous flame retardant (FR) component a low dielectric constant (Dk) flat glass fiber.

### BACKGROUND OF THE DISCLOSURE

Polybutylene terephthalate (PBT)-based thermoplastic compositions have been widely used in electronics and automobile applications. For fire safety, flame retardant PBT compositions have been developed. Aluminum diethylphosphinate (ADP) is a conventional flame retardant (FR) additive for use in PBT compositions; it is economically friendly and provides good FR properties. For thin-wall PBT applications, the ADP loading must be high (15 wt% or greater) to provide desired FR performance. At these high loading levels, however, ADP decreases the mechanical performance of the base resin. In particular, the impact strength of the PBT composition is lowered to less than 90 Joules per meter (J/m) as tested in accordance with ASTM D256.

PBT is a primary base resin suitable for nano-molding technology applications such as antenna splits for high-end smart mobile devices. Fast charging, requiring a charging power of as high as 100 watts (W), is a popular new feature for such devices. Regulation IEC62368-1 necessitates the use of FR materials for these mobile devices, including in the antenna split. Another desired property for the resin in these applications is high ductility. Accordingly, it is desirable for such compositions to have good thin-wall FR and ductility properties. Conventional resin compositions have not adequately addressed these features.

These and other shortcomings are addressed by aspects of the present disclosure.

### SUMMARY

Aspects of the disclosure relate to thermoplastic compositions including: (a) from about 20 wt% to about 60 wt% of a polybutylene terephthalate (PBT) component; (b) from about 3 wt% to about 30 wt% of a polyetherimide (PEI) component; (c) from about 5 wt% to about 25 wt% of a phosphorous flame retardant (FR) component; and (d) from about 10 wt% to about 50 wt% of a low dielectric constant (Dk) flat glass fiber. The combined weight percent value of all components does not exceed 100 wt%, and all weight percent values are based on the total weight of the composition.

Further aspects of the disclosure relate to methods of forming a thermoplastic composition including (a) from about 20 wt% to about 60 wt% of a polybutylene terephthalate (PBT) component, (b) from about 3 wt% to about 30 wt% of a polyetherimide (PEI) component, (c) from about 5 wt% to about 25 wt% of a phosphorous flame retardant (FR) component including aluminum diethylphosphinate (ADP) and melamine polyphosphate (MPP), and (d) from about 10 wt% to about 50 wt% of a low Dk flat glass fiber. The method includes: combining, to form a mixture, components (a)-(d); and extruding and/or molding the mixture to form the composition. The combined weight percent value of all components does not exceed 100 wt%, and all weight percent values are based on the total weight of the composition. The phosphorous flame retardant (FR) component (c) is combined with components (a), (b) and (d) as a pre-blended composition including the ADP and the MPP.

Yet further aspects of the disclosure relate to thermoplastic compositions formed according to a process including: combining, to form a mixture, (a) from about 20 wt% to about 60 wt% of a polybutylene terephthalate (PBT) component, (b) from about 3 wt% to about 30 wt% of a polyetherimide (PEI) component, (c) from about 5 wt% to about 25 wt% of a phosphorous flame retardant (FR) component including aluminum diethylphosphinate (ADP) and melamine polyphosphate (MPP), and (d) from about 10 wt% to about 50 wt% of a low Dk flat glass fiber; and extruding and/or molding the mixture to form the composition. The combined weight percent value of all components does not exceed 100 wt%, and all weight percent values are based on the total weight of the composition. The phosphorous flame retardant (FR) component (c) is combined with components (a), (b) and (d) as a pre-blended composition including the ADP and the MPP.

### BRIEF DESCRIPTION OF THE FIGURES

In the drawings, which are not necessarily drawn to scale, like numerals may describe similar components in different views. Like numerals having different letter suffixes may represent different instances of similar components. The drawings illustrate generally, by way of example, but not by way of limitation, various aspects discussed in the present document.

FIG. 1 illustrates a cross section of a glass fiber used to determine aspect ratio according to aspects of the present disclosure.

## DETAILED DESCRIPTION

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting.

Various combinations of elements of this disclosure are encompassed by this disclosure, e.g., combinations of elements from dependent claims that depend upon the same independent claim.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is in no way intended that an order be inferred, in any respect. This holds for any possible non-express basis for interpretation, including: matters of logic with respect to arrangement of steps or operational flow; plain meaning derived from grammatical organization or punctuation; and the number or type of aspects described in the specification.

All publications mentioned herein are incorporated herein by reference to disclose and describe the methods and/or materials in connection with which the publications are cited.

### Definitions

It is also to be understood that the terminology used herein is for the purpose of describing particular aspects only and is not intended to be limiting. As used in the specification and in the claims, the term "comprising" can include the aspects "consisting of" and "consisting essentially of." Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to "a polybutylene terephthalate component" includes mixtures of two or more PBT polymers.

As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated $\pm 10\%$ variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F,

B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included.

As used herein, the terms "number average molecular weight" or "$M_n$" can be used interchangeably, and refer to the statistical average molecular weight of all the polymer chains in the sample and is defined by the formula:

$$M_n = \frac{\sum N_i M_i}{\sum N_i},$$

where $M_i$ is the molecular weight of a chain and $N_i$ is the number of chains of that molecular weight. $M_n$ can be determined for polymers, e.g., polycarbonate polymers, by methods well known to a person having ordinary skill in the art using molecular weight standards, e.g. polycarbonate standards or polystyrene standards, preferably certified or traceable molecular weight standards.

As used herein, the terms "weight average molecular weight" or "$M_w$" can be used interchangeably, and are defined by the formula:

$$M_w = \frac{\sum N_i {M_i}^2}{\sum N_i M_i},$$

where $M_i$ is the molecular weight of a chain and $N_i$ is the number of chains of that molecular weight. Compared to $M_n$, $M_w$ takes into account the molecular weight of a given chain in determining contributions to the molecular weight average. Thus, the greater the molecular weight of a given chain, the more the chain contributes to the $M_w$. $M_w$ can be determined for polymers, e.g., polycarbonate polymers, by methods well known to a person having ordinary skill in the art using molecular weight standards, e.g., polycarbonate standards or polystyrene standards, preferably certified or traceable molecular weight standards.

As used herein, the terms "polydispersity index" or "PDI" can be used interchangeably, and are defined by the formula:

$$PDI = \frac{M_w}{M_n}.$$

The PDI has a value equal to or greater than 1, but as the polymer chains approach uniform chain length, the PDI approaches unity.

The terms "BisA," "BPA," or "bisphenol A," which can be used interchangeably, as used herein refers to a compound having a structure represented by the formula:

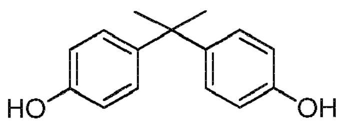

BisA can also be referred to by the name 4,4'-(propane-2,2-diyl)diphenol; p,p'-isopropylidenebisphenol; or 2,2-bis(4-hydroxyphenyl)propane. BisA has the CAS # 80-05-7.

As used herein, "polycarbonate" refers to an oligomer or polymer including residues of one or more dihydroxy compounds, e.g., dihydroxy aromatic compounds, joined by carbonate linkages; it also encompasses homopolycarbonates, copolycarbonates, and (co)polyester carbonates.

The terms "residues" and "structural units", used in reference to the constituents of the polymers, are synonymous throughout the specification.

As used herein the terms "weight percent," "wt%," and "wt. %," which can be used interchangeably, indicate the percent by weight of a given component based on the total weight of the composition, unless otherwise specified. That is, unless otherwise specified, all wt% values are based on the total weight of the composition. It should be understood that the sum of wt% values for all components in a disclosed composition or formulation are equal to 100.

Unless otherwise stated to the contrary herein, all test standards are the most recent standard in effect at the time of filing this application.

Each of the raw materials used in example and/or comparative compositions described herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

## Thermoplastic Compositions

Thermoplastic compositions according to aspects of the disclosure include from about 20 wt% to about 60 wt% of a polybutylene terephthalate (PBT) component; from about 3 wt% to about 30 wt% of a polyetherimide (PEI) component; from about 5 wt% to about 25 wt% of a phosphorous flame retardant (FR) component; and from about 10 wt% to about 50 wt% of a low Dk flat glass fiber. The combined weight percent value of all components does not exceed 100 wt%, and all weight percent values are based on the total weight of the composition.

As used herein, "polybutylene terephthalate" (PBT) can be used interchangeably with poly(1,4-butylene terephthalate). The PBT component may include PBT homopolymers, PBT copolymers, or a combination thereof. The composition may in some aspects include at least 20 wt%, or at least 25 wt%, or at least 30 wt%, or no greater than 60 wt%, or no greater than 55 wt%, or no greater than 50 wt%, or no greater than 45 wt%, or no greater than 40 wt%, of the PBT component.

As used herein, "polyetherimide" (PEI) refers to polymers and/or copolymers containing ether and optionally substituted imide functional groups in the backbone of the polymer. Compositions according to aspects of the disclosure may include at least 3 wt%, or at least 5 wt%, or at least 8 wt%, or at least 10 wt%, or no greater than 30 wt%, or no greater than 25 w%, or no greater than 20 wt%, or no greater than 15 wt%, of the PEI component.

In certain aspects the phosphorous FR component includes aluminum diethylphosphinate (ADP), melamine polyphosphate (MPP), or a combination thereof. ADP has the following chemical structure:

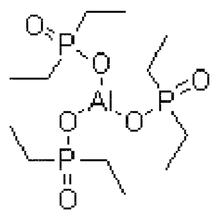

MPP has the following chemical structure:

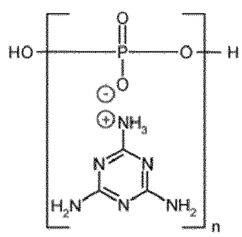

In certain aspect the phosphorous FR component includes both ADP and MPP. In particular aspects the ADP and MPP are included in phosphorous FR component in a form of a pre-blended FR composition. As used herein, a "pre-blended FR composition" is an FR composition that includes the recited components (e.g., ADP and MPP). The pre-blended FR composition may be added to the other components of the composition in the pre-blended form, i.e., without separately adding ADP and MPP to the other components of the composition.

In certain aspects the composition includes at least 5 wt%, or at least 8 wt%, or at least 10 wt%, or at least 12 wt%,

or no greater than 25 wt%, or no greater than 22 wt%, or no greater than 20 wt%, or no greater than 18 wt%, or no greater than 15 wt%, of the phosphorous FR component.

In some aspects the low Dk flat glass fiber has a Dk of less than 5 at a frequency of 1 gigahertz (GHz). In other aspects the low Dk flat glass fiber has a Dk of less than 4.9, or less than 4.8, or less than 4.7, or less than 4.6, or less than 4.5, or less than 4.4, or less than 4.3, or less than 4.2, or less than 4.1, or less than 4.0, at a frequency of 1 GHz.

In specific aspects the low Dk flat glass fiber has an aspect ratio of at least 2. With reference to FIG. 1, aspect ratio refers to the flat ratio of the cross section of the glass fiber, which is the width of the cross section of the glass fiber divided by its thickness (W/D). In further aspects the low Dk flat glass fiber has an aspect ratio of at least 2.2, or at least 2.4, or at least 2.4, or at least 2.6, or at least 2.8, or at least 3.0, or no more than 10, or no more than 9.0, or no more than 8.0, or no more than 7.0, or no more than 6.0, or no more than 5.0, or no more than 4.8, or no more than 4.6, or no more than 4.4, or no more than 4.2, or no more than 4.0.

In some aspects the composition includes from about 10 wt% to about 50 wt% of the low Dk flat glass fiber. In further aspects the composition includes at least 15 wt%, or at least 20 wt%, or at least 30 wt%, or at least 35 wt%, or no more than 50 wt%, or no more than 48 wt%, or no more than 45 wt%, or no more than 40 wt%, of the low Dk flat glass fiber.

In some aspects the composition further includes from about 0.1 wt% to about 10 wt% of an impact modifier component. The impact modifier component may include, but is not limited to, an ethylene-acrylic ester-glycidyl methacrylate terpolymer, an ethylene-glycidyl methacrylate copolymer, an acrylate-based ionomer, a sulfonate-based ionomer, a polyester ether elastomer, styrene-ethylene-butylene-styrene (SEBS), or a combination thereof. In specific aspects the impact modifier component includes an ethylene-acrylic ester-glycidyl methacrylate terpolymer, a polyester ether elastomer, an ethylene-acrylic acid zinc ionomer, or a combination thereof.

The ionomer may include, but is not limited to, a cation including sodium, magnesium, calcium, zinc, or a combination thereof.

In certain aspects the composition includes at least 0.1 wt%, or at least 0.2 wt%, or at least 0.4 wt%, or at least 0.6 wt%, or at least 0.8 wt%, or at least 1.0 wt%, or no more than 10 wt%, or no more than 9 wt%, or no more than 8 wt%, or no more than 7 wt%, or no more than 6 wt%, or no more than 5 wt%, of the impact modifier component.

The composition in some aspects may include from about 0.1 wt% to about 10 wt% of a polycarbonate copolymer component. The polycarbonate copolymer component may include a copolyestercarbonate in some aspects. The copolyestercarbonate copolymer may include ester units of the formula

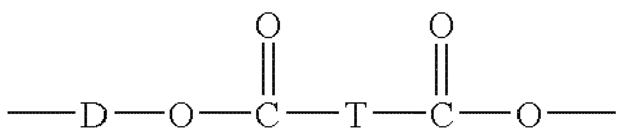

wherein D is a divalent group derived from a dihydroxy compound, and may be, for example, a $C_{2-30}$ alkylene group, a $C_{3-30}$ alicyclic group, a $C_{6-30}$ aromatic group or a polyoxyalkylene group in which the alkylene groups contain 2 to 6 carbon atoms, specifically 2, 3, or 4 carbon atoms; and T divalent group derived from a dicarboxylic acid, and may be, for example, a $C_{2-30}$ alkylene group, a $C_{6-30}$ alicyclic group, a $C_{6-30}$ alkyl aromatic group, or a $C_{6-30}$ aromatic group.

Examples of aromatic dicarboxylic acids from which the T group in the ester is derived include isophthalic or terephthalic acid, 1,2-di(p-carboxyphenyl)ethane, 4,4'-dicarboxydiphenyl ether, 4,4'-bisbenzoic acid, and combinations including at least one of the foregoing acids. Acids containing fused rings can also be present, such as in 1,4-, 1,5-, or 2,6-naphthalenedicarboxylic acids. Specific dicarboxylic acids are terephthalic acid, isophthalic acid, naphthalene dicarboxylic acid, cyclohexane dicarboxylic acid, or combinations thereof. A specific dicarboxylic acid includes a combination of isophthalic acid and terephthalic acid wherein the weight ratio of isophthalic acid to terephthalic acid is 99:1 to 1:99. In an aspect, D is a $C_{2-6}$ alkylene group and T is p-phenylene, m-phenylene, naphthalene, a divalent cycloaliphatic group, or a combination thereof. This class of polyester includes the poly(alkylene terephthalates).

In an aspect, the ester units of the polyester or polyester unit include arylate ester units derived from the reaction product of one equivalent of an isophthalic acid derivative and/or terephthalic acid derivative with a resorcinol of the formula

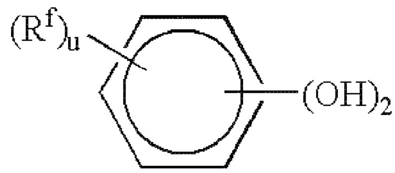

wherein each $R^f$ is independently $C_{1-12}$ alkyl, or halogen, and u is 0 to 4. It will be understood that $R^f$ is hydrogen when u is 0.

Typically, the halogen can be chlorine or bromine. In an aspect, compounds in which the -OH groups are substituted meta to one another, and wherein $R^f$ and u are as described above, are also generally referred to herein as resorcinols. Examples of compounds that may be represented by this formula include resorcinol (where u is 0), substituted resorcinol compounds such as 5-methyl resorcinol, 5-ethyl resorcinol, 5-propyl resorcinol, 5-butyl resorcinol, 5-t-butyl resorcinol, 5-phenyl resorcinol, 5-cumyl resorcinol, 2,4,5,6-tetrafluoro resorcinol, 2,4,5,6-tetrabromo resorcinol, or the like; catechol; hydroquinone; substituted hydroquinones such as 2-methyl hydroquinone, 2-ethyl hydroquinone, 2-propyl hydroquinone, 2-butyl hydroquinone, 2-t-butyl hydroquinone, 2-phenyl hydroquinone, 2-cumyl hydroquinone, 2,3,5,6-tetramethyl hydroquinone, 2,3,5,6-tetra-t-butyl hydroquinone, 2,3,5,6-tetrafluoro hydroquinone, 2,3,5,6-tetrabromo hydroquinone, or the like; or combinations including at least one of the foregoing compounds.

Such arylate ester units are also referred to herein as isophthalate-terephthalate-resorcinol ester units, sometimes referred to in abbreviated form as ITR ester units. As used herein, isophthalate-terephthalate-resorcinol ester units include a combination isophthalate esters, terephthalate esters, and resorcinol esters. In a specific aspect, isophthalate-terephthalate-resorcinol ester units include a combination of isophthalate-resorcinol ester units and terephthalate-resorcinol ester units. In a specific aspect, where u is 0, the arylate ester units include isophthalate-terephthalate-resorcinol ester units in which the resorcinol is 1,3-dihydroxybenzene. Exemplary aromatic polyester units include poly(isophthalate-terephthalate-resorcinol) esters, poly(isophthalate-terephthalate-bisphenol-A) esters, poly[(isophthalate-terephthalate-resorcinol) ester-co-(isophthalate-terephthalate-bisphenol-A)] ester, or a combination including at least one of these. In an aspect, a useful arylate polyester unit is a poly(isophthalate-terephthalate-resorcinol) ester. In a particular aspect the copolyestercarbonate copolymer includes ITR units and polycarbonate units, as shown in the formula below:

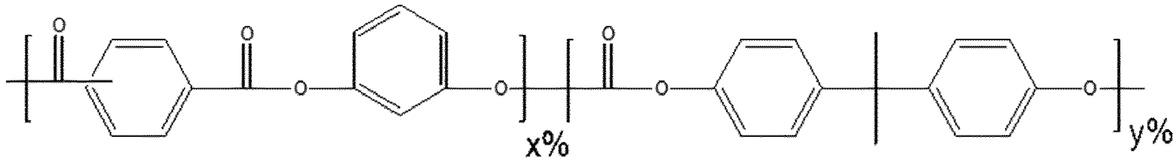

wherein x is the mole % of the ITR ester unit and y is the mole % of the polycarbonate unit. An exemplary copolyestercarbonate copolymer is SLX 20/80 resin, available from SABIC. SLX 20/80 includes 20 mole % ITR units and 80 mole % PC units.

In yet further aspects the copolyestercarbonate copolymer has a mole % ratio of ITR ester units to polycarbonate monomer units of from about 15:85 to about 95:5, or from about 20:80 to about 90:10, or from about 15:85 to about 25:75, or from about 18:82 to about 22:78, or about 20:80, or from about 85:15 to about 95:5, or from about 88:12 to about 92:8, or about 90:10.

In some aspects the composition further includes at least one additional additive. The at least one additional additive may include, but is not limited to, an acid scavenger, an anti-drip agent, an antioxidant, an antistatic agent, a chain extender, a colorant, a release agent, a flow promoter, a lubricant, a plasticizer, a quenching agent, a flame retardant, a UV reflecting additive, an impact modifier, a blowing agent, a reinforcing agent, or a combination thereof. In certain aspects the at least one additional additive includes a polytetrafluoroethylene anti-drip agent. In other aspects the composition is free of per-and polyfluoroalkyl substances (PFAS-free).

Compositions according to aspects of the disclosure may include from about 0.1 wt% to about 3 wt% of the at least one additional additive. In further aspects the composition includes no more than 2.8 wt%, or no more than 2.6 wt%, or no more than 2.4 wt%, or no more than 2.2 wt%, or no more than 2.0 wt%, of the at least one additional additive.

Compositions according to aspects of the disclosure may have improved properties as compared to comparative compositions that do not include the low Dk flat glass fiber and/or the phosphorous FR component.

In certain aspects the composition has a UL94 flame retardancy rating of V0 or V1 at a thickness of 0.8 millimeter (mm) or 1.0 mm. In specific aspects the composition has a UL94 flame retardancy rating of V0 at a thickness of 0.8 mm.

In further aspects the composition has a notched Izod impact strength (NII) of at least 100 joules per meter (J/m) as tested in accordance with ASTM D256 at 25 °C and 5 pound-force per foot (lbf/ft). In other aspects the composition has a NII of at least 105 J/m, or at least 110 J/m, or at least 115 J/m, or at least 120 J/m, or at least 125 J/m, or at least 130 J/m, or at least 140 J/m, or no more than 200 J/m, as tested in accordance with ASTM D256 at 25 °C and 5 lbf/ft.

In certain aspects the composition has a metal bonding force of at least 20 megapascals (MPa) as tested in accordance with ISO 19095 using a TRI-treatment. In other aspects the composition has a metal bonding force of at least 21 MPa, or at least 22 MPa, or at least 23 MPa, or at least 24 MPa, or at least 25 MPa, or at least 26 MPa, or at least 27 MPa, or at least 28 MPa, or at least 29 MPa, or at least 30 MPa, or no more than 75 MPa, as tested in accordance with ISO 19095 using a TRI-treatment.

Methods of Manufacture

The one or any foregoing components described herein may be first dry blended with each other, or dry blended with any combination of foregoing components, then fed into an extruder from one or multi-feeders, or separately fed into an extruder from one or multi-feeders. The fillers used in the disclosure may also be first processed into a masterbatch, then fed into an extruder. The components may be fed into the extruder from a throat hopper or any side feeders.

The extruders used in the disclosure may have a single screw, multiple screws, intermeshing co-rotating or counter rotating screws, non-intermeshing co-rotating or counter rotating screws, reciprocating screws, screws with pins, screws with screens, barrels with pins, rolls, rams, helical rotors, co-kneaders, disc-pack processors, various other types of extrusion equipment, or combinations including at least one of the foregoing.

The components may also be mixed together and then melt-blended to form the thermoplastic compositions. The melt blending of the components involves the use of shear force, extensional force, compressive force, ultrasonic energy, electromagnetic energy, thermal energy or combinations including at least one of the foregoing forces or forms of energy.

The barrel temperature on the extruder during compounding can be set at the temperature where at least a portion of the polymer has reached a temperature greater than or equal to about the melting temperature, if the resin is a semi-crystalline organic polymer, or the flow point (e.g., the glass transition temperature) if the resin is an amorphous resin.

The mixture including the foregoing mentioned components may be subject to multiple blending and forming steps if desirable. For example, the thermoplastic composition may first be extruded and formed into pellets. The pellets may then be fed into a molding machine where it may be formed into any desirable shape or product. Alternatively, the thermoplastic composition emanating from a single melt blender may be formed into sheets or strands and subjected to post-extrusion processes such as annealing, uniaxial or biaxial orientation.

The temperature of the melt in the present process may in some aspects be maintained as low as possible in order to avoid excessive thermal degradation of the components. In certain aspects the melt temperature is maintained between about 230°C and about 350°C, although higher temperatures can be used provided that the residence time of the resin in the processing equipment is kept relatively short. In some aspects the melt processed composition exits processing equipment such as an extruder through small exit holes in a die. The resulting strands of molten resin may be cooled by passing the strands through a water bath. The cooled strands can be chopped into pellets for packaging and further handling.

Certain aspects of the disclosure relate to methods of forming a thermoplastic composition including (a) from about 20 wt% to about 60 wt% of a polybutylene terephthalate (PBT) component, (b) from about 3 wt% to about 30 wt% of a polyetherimide (PEI) component, (c) from about 5 wt% to about 25 wt% of a phosphorous flame retardant (FR) component including aluminum diethylphosphinate (ADP) and melamine polyphosphate (MPP), and (d) from about 10 wt% to about 50 wt% of a low Dk flat glass fiber. The method includes: combining, to form a mixture, components (a)-(d); and extruding and/or molding the mixture to form the composition. The phosphorous flame retardant (FR) component (c) is combined with components (a), (b) and (d) as a pre-blended composition including the ADP and the MPP.

Further aspects of the disclosure relate to a thermoplastic composition formed according to a process including: combining, to form a mixture, (a) from about 20 wt% to about 60 wt% of a polybutylene terephthalate (PBT) component, (b) from about 3 wt% to about 30 wt% of a polyetherimide (PEI) component, (c) from about 5 wt% to about 25 wt% of a phosphorous flame retardant (FR) component including aluminum diethylphosphinate (ADP) and melamine polyphosphate (MPP), and (d) from about 10 wt% to about 50 wt% of a low Dk flat glass fiber; and extruding and/or molding the mixture to form the composition. The phosphorous flame retardant (FR) component (c) is combined with components (a), (b) and (d) as a pre-blended composition including the ADP and the MPP.

Compositions formed according to the methods described herein may include any of the components described herein and in the amounts described herein. Further, the compositions may have any of the properties described herein.

**Articles of Manufacture**

In certain aspects, the present disclosure pertains to shaped, formed, or molded articles including the thermoplastic compositions. The thermoplastic compositions can be molded into useful shaped articles by a variety of means such as injection molding, extrusion, rotational molding, blow molding and thermoforming to form articles and structural components of, for example, personal or commercial electronics devices, including but not limited to cellular telephones, tablet computers, personal computers, notebook and portable computers, and other such equipment, medical applications, RFID applications, automotive applications, and the like. In a further aspect, the article is extrusion molded. In a still further aspect, the article is injection molded.

In specific aspects the article is suitable for use in nano-molding technology applications such as antenna splits for high-end smart mobile devices.

Various combinations of elements of this disclosure are encompassed by this disclosure, e.g., combinations of elements from dependent claims that depend upon the same independent claim.

**Aspects of the Disclosure**

In various aspects, the present disclosure pertains to and includes at least the following aspects.

Aspect 1. A thermoplastic composition comprising:

(a) from about 20 wt% to about 60 wt% of a polybutylene terephthalate (PBT) component;
(b) from about 3 wt% to about 30 wt% of a polyetherimide (PEI) component;
(c) from about 5 wt% to about 25 wt% of a phosphorous flame retardant (FR) component; and
(d) from about 10 wt% to about 50 wt% of a low Dk flat glass fiber,

wherein the combined weight percent value of all components does not exceed 100 wt%, and all weight percent values are based on the total weight of the composition.

Aspect 2. The thermoplastic composition according to Aspect 1, wherein the low Dk flat glass fiber has a Dk of less than 5 at a frequency of 1 gigahertz (GHz).

Aspect 3. The thermoplastic composition according to Aspect 1 or 2, wherein the low Dk flat glass fiber has an aspect ratio of at least 2.

Aspect 4. The thermoplastic composition according to any of Aspects 1 to 3, wherein the phosphorous FR component comprises aluminum diethylphosphinate (ADP), melamine polyphosphate (MPP), or a combination thereof.

Aspect 5. The thermoplastic composition according to Aspect 4, wherein the phosphorous FR component comprises ADP and MPP.

Aspect 6. The thermoplastic composition according to Aspect 5, wherein the ADP and MPP are included in phosphorous FR component in a form of a pre-blended FR composition.

Aspect 7. The thermoplastic composition according to any of Aspects 1 to 6, wherein the composition further comprises from about 0.1 wt% to about 10 wt% of an impact modifier component.

Aspect 8. The thermoplastic composition according to Aspect 7, wherein the impact modifier component comprises an ethylene-acrylic ester-glycidyl methacrylate terpolymer, an ethylene-glycidyl methacrylate copolymer, an acrylate-based ionomer, a sulfonate-based ionomer, a polyester ether elastomer, styrene-ethylene-butylene-styrene (SEBS), or a combination thereof.

Aspect 9. The thermoplastic composition according to Aspect 7, wherein the impact modifier component comprises an ethylene-acrylic ester-glycidyl methacrylate terpolymer, a polyester ether elastomer, an ethylene-acrylic acid zinc ionomer, or a combination thereof.

Aspect 10. The thermoplastic composition according to any of Aspects 1 to 9, wherein the composition further comprises from about 0.1 wt% to about 10 wt% of a polycarbonate copolymer component.

Aspect 11. The thermoplastic composition according to Aspect 10, wherein the polycarbonate copolymer component comprises polycarbonate units and isophthalate-terephthalate-resorcinol (ITR) ester units.

Aspect 12. The thermoplastic composition according to any of Aspects 1 to 10, wherein the composition further comprises from about 0.1 wt% to about 3 wt% of at least one additional additive.

Aspect 13. The thermoplastic composition according to Aspect 12, wherein the at least one additional additive comprises an acid scavenger, an anti-drip agent, an antioxidant, an antistatic agent, a chain extender, a colorant, a release agent, a flow promoter, a lubricant, a plasticizer, a quenching agent, a flame retardant, a UV reflecting additive, an impact modifier, a blowing agent, a reinforcing agent, or a combination thereof.

Aspect 14. The thermoplastic composition according to Aspect 12 or 13, wherein the at least one additional additive comprises a polytetrafluoroethylene anti-drip agent.

Aspect 15. The thermoplastic composition according to any of Aspects 1 to 13, wherein the composition is free of per-and polyfluoroalkyl substances (PFAS-free).

Aspect 16. The thermoplastic composition according to any of Aspects 1 to 15, wherein the composition has a UL94 flame retardancy rating of V0 or V1 at a thickness of 0.8 millimeter (mm) or 1.0 mm.

Aspect 17. The thermoplastic composition according to any of Aspects 1 to 16, wherein the composition has a notched Izod impact strength of at least 100 joules per meter (J/m) as tested in accordance with ASTM D256 at 25 °C and 5 pound-force per foot (lbf/ft).

Aspect 18. The thermoplastic composition according to any of Aspects 1 to 17, wherein the composition has a metal bonding force of at least 20 megapascals (MPa) as tested in accordance with ISO 19095 using a TRI-treatment.

Aspect 19. A method of forming a thermoplastic composition comprising (a) from about 20 wt% to about 60 wt% of a polybutylene terephthalate (PBT) component, (b) from about 3 wt% to about 30 wt% of a polyetherimide (PEI) component, (c) from about 5 wt% to about 25 wt% of a phosphorous flame retardant (FR) component comprising aluminum diethylphosphinate (ADP) and melamine polyphosphate (MPP), and (d) from about 10 wt% to about 50 wt% of a low Dk flat glass fiber, the method comprising:

combining, to form a mixture, components (a)-(d); and
extruding and/or molding the mixture to form the composition,
wherein the combined weight percent value of all components does not exceed 100 wt%, and all weight percent values are based on the total weight of the composition, and
wherein the phosphorous flame retardant (FR) component (c) is combined with components (a), (b) and (d) as a pre-blended composition comprising the ADP and the MPP.

Aspect 20. The method according to Aspect 19, wherein the low Dk flat glass fiber has a Dk of less than 5 at a frequency of 1 gigahertz (GHz).
Aspect 21. The method according to Aspect 19 or 20, wherein the low Dk flat glass fiber has an aspect ratio of at least 2.
Aspect 22. The method according to any of Aspects 19 to 21, wherein the phosphorous FR component comprises aluminum diethylphosphinate (ADP), melamine polyphosphate (MPP), or a combination thereof.
Aspect 23. The method according to Aspect 22, wherein the phosphorous FR component comprises ADP and MPP.
Aspect 24. The method according to Aspect 23, wherein the ADP and MPP are included in phosphorous FR component in a form of a pre-blended FR composition.
Aspect 25. The method according to any of Aspects 19 to 24, wherein the composition further comprises from about 0.1 wt% to about 10 wt% of an impact modifier component.
Aspect 26. The method according to Aspect 25, wherein the impact modifier component comprises an ethylene-acrylic ester-glycidyl methacrylate terpolymer, an ethylene-glycidyl methacrylate copolymer, an acrylate-based ionomer, a sulfonate-based ionomer, a polyester ether elastomer, styrene-ethylene-butylene-styrene (SEBS), or a combination thereof.
Aspect 27. The method according to Aspect 26, wherein the impact modifier component comprises an ethylene-acrylic ester-glycidyl methacrylate terpolymer, a polyester ether elastomer, an ethylene-acrylic acid zinc ionomer, or a combination thereof.
Aspect 28. The method according to any of Aspects 19 to 27, wherein the composition further comprises from about 0.1 wt% to about 10 wt% of a polycarbonate copolymer component.
Aspect 29. The method according to Aspect 28, wherein the polycarbonate copolymer component comprises polycarbonate units and isophthalate-terephthalate-resorcinol (ITR) ester units.
Aspect 30. The method according to any of Aspects 19 to 29, wherein the composition further comprises from about 0.1 wt% to about 3 wt% of at least one additional additive.
Aspect 31. The method according to Aspect 30, wherein the at least one additional additive comprises an acid scavenger, an anti-drip agent, an antioxidant, an antistatic agent, a chain extender, a colorant, a release agent, a flow promoter, a lubricant, a plasticizer, a quenching agent, a flame retardant, a UV reflecting additive, an impact modifier, a blowing agent, a reinforcing agent, or a combination thereof.
Aspect 32. The method according to Aspect 30 or 31, wherein the at least one additional additive comprises a polytetrafluoroethylene anti-drip agent.
Aspect 33. The method according to any of Aspects 19 to 31, wherein the composition is free of per-and polyfluoroalkyl substances (PFAS-free).
Aspect 34. The method according to any of Aspects 19 to 33, wherein the composition has a UL94 flame retardancy rating of V0 or V1 at a thickness of 0.8 millimeter (mm) or 1.0 mm.
Aspect 35. The method according to any of Aspects 19 to 34, wherein the composition has a notched Izod impact strength of at least 100 joules per meter (J/m) as tested in accordance with ASTM D256 at 25 °C and 5 pound-force per foot (lbf/ft).
Aspect 36. The method according to any of Aspects 19 to 35, wherein the composition has a metal bonding force of at least 20 megapascals (MPa) as tested in accordance with ISO 19095 using a TRI-treatment.
Aspect 37. A thermoplastic composition formed according to a process comprising:

combining, to form a mixture, (a) from about 20 wt% to about 60 wt% of a polybutylene terephthalate (PBT) component, (b) from about 3 wt% to about 30 wt% of a polyetherimide (PEI) component, (c) from about 5 wt% to about 25 wt% of a phosphorous flame retardant (FR) component comprising aluminum diethylphosphinate (ADP) and melamine polyphosphate (MPP), and (d) from about 10 wt% to about 50 wt% of a low Dk flat glass fiber; and
extruding and/or molding the mixture to form the composition,
wherein the combined weight percent value of all components does not exceed 100 wt%, and all weight percent values are based on the total weight of the composition, and
wherein the phosphorous flame retardant (FR) component (c) is combined with components (a), (b) and (d) as a pre-blended composition comprising the ADP and the MPP.

Aspect 38. The thermoplastic composition according to Aspect 37, wherein the low Dk flat glass fiber has a Dk of less than 5 at a frequency of 1 gigahertz (GHz).

Aspect 39. The thermoplastic composition according to Aspect 37 or 38, wherein the low Dk flat glass fiber has an aspect ratio of at least 2.

Aspect 40. The thermoplastic composition according to any of Aspects 37 to 39, wherein the phosphorous FR component comprises aluminum diethylphosphinate (ADP), melamine polyphosphate (MPP), or a combination thereof.

Aspect 41. The thermoplastic composition according to Aspect 40, wherein the phosphorous FR component comprises ADP and MPP.

Aspect 42. The thermoplastic composition according to Aspect 41, wherein the ADP and MPP are included in phosphorous FR component in a form of a pre-blended FR composition.

Aspect 43. The thermoplastic composition according to any of Aspects 37 to 42, wherein the composition further comprises from about 0.1 wt% to about 10 wt% of an impact modifier component.

Aspect 44. The thermoplastic composition according to Aspect 43, wherein the impact modifier component comprises an ethylene-acrylic ester-glycidyl methacrylate terpolymer, an ethylene-glycidyl methacrylate copolymer, an acrylate-based ionomer, a sulfonate-based ionomer, a polyester ether elastomer, styrene-ethylene-butylene-styrene (SEBS), or a combination thereof.

Aspect 45. The thermoplastic composition according to Aspect 44, wherein the impact modifier component comprises an ethylene-acrylic ester-glycidyl methacrylate terpolymer, a polyester ether elastomer, an ethylene-acrylic acid zinc ionomer, or a combination thereof.

Aspect 46. The thermoplastic composition according to any of Aspects 37 to 45, wherein the composition further comprises from about 0.1 wt% to about 10 wt% of a polycarbonate copolymer component.

Aspect 47. The thermoplastic composition according to Aspect 46, wherein the polycarbonate copolymer component comprises polycarbonate units and isophthalate-terephthalate-resorcinol (ITR) ester units.

Aspect 48. The thermoplastic composition according to any of Aspects 37 to 47, wherein the composition further comprises from about 0.1 wt% to about 3 wt% of at least one additional additive.

Aspect 49. The thermoplastic composition according to Aspect 48, wherein the at least one additional additive comprises an acid scavenger, an anti-drip agent, an antioxidant, an antistatic agent, a chain extender, a colorant, a release agent, a flow promoter, a lubricant, a plasticizer, a quenching agent, a flame retardant, a UV reflecting additive, an impact modifier, a blowing agent, a reinforcing agent, or a combination thereof.

Aspect 50. The thermoplastic composition according to Aspect 48 or 49, wherein the at least one additional additive comprises a polytetrafluoroethylene anti-drip agent.

Aspect 51. The thermoplastic composition according to any of Aspects 37 to 49, wherein the composition is free of per-and polyfluoroalkyl substances (PFAS-free).

Aspect 52. The thermoplastic composition according to any of Aspects 37 to 51, wherein the composition has a UL94 flame retardancy rating of V0 or V1 at a thickness of 0.8 millimeter (mm) or 1.0 mm.

Aspect 53. The thermoplastic composition according to any of Aspects 37 to 52, wherein the composition has a notched Izod impact strength of at least 100 joules per meter (J/m) as tested in accordance with ASTM D256 at 25 °C and 5 pound-force per foot (lbf/ft).

Aspect 54. The thermoplastic composition according to any of Aspects 37 to 53, wherein the composition has a metal bonding force of at least 20 megapascals (MPa) as tested in accordance with ISO 19095 using a TRI-treatment.

## EXAMPLES

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (e.g., amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt%.

There are numerous variations and combinations of reaction conditions, e.g., component concentrations, desired solvents, solvent mixtures, temperatures, pressures and other reaction ranges and conditions that can be used to optimize the product purity and yield obtained from the described process. Only reasonable and routine experimentation will be required to optimize such process conditions.

Compositions according to aspects of the disclosure were injection molded into samples/articles from extruded pellets. An exemplary extrusion profile for the compositions is set forth in Table 1:

**Table 1 - Typical Extrusion Profile**

| Parameters | Unit | Condition |
|---|---|---|
| Compounder Type | NONE | TEM-37BS |
| Barrel Size | mm | 1500 |
| Die | mm | 4 |
| Zone 1 Temp | °C | 100 |
| Zone 2 Temp | °C | 200 |
| Zones 3-5 Temp | °C | 250 |
| Zone 6-11 Temp | °C | 260 |
| Die Temp | °C | 260 |
| Screw speed | rpm | 200 |
| Throughput | kg/hr | 40 |
| Torque | % | 60-80 |
| Vacuum 1 | bar | -0.08 |
| Side Feeder 1 speed | rpm | 250 |
| Melt temperature | °C | 270-280 |

The extruded pellets were injection molded according to the exemplary molding profile set forth in Table 2:

**Table 2 - Typical Molding Profile**

| Parameters | Unit | Condition |
|---|---|---|
| Cnd: Pre-drying time | Hour | 4 |
| Cnd: Pre-drying temp | °C | 120 |
| Molding Machine | NONE | FANUC; SE180; UH110 |
| Mold Type (insert) | NONE | Tensile, Flexural, and IZOD bars<br>100×70×1.6 mm parts<br>UL bars at 0.8/1.0 mm |
| Hopper temp | °C | 50 |
| Zone 1 temp | °C | 240-250 |
| Zone 2 temp | °C | 250-260 |
| Zone 3 temp | °C | 260-270 |
| Nozzle temp | °C | 240-260 |
| Mold temp | °C | 120-150 |
| Screw speed | rpm | 100 |
| Back pressure | $kgf/cm^2$ | 30-60 |
| Cooling time | s | 15-30 |
| Injection speed | mm/s | 50-100 |
| Holding pressure | $kgf/cm^2$ | 800-1000 |
| Max. Injection pressure | $kgf/cm^2$ | 1000-1500 |

The UL94 vertical burn rating criterion for compositions tested herein is set forth in Table 3:

**Table 3 - UL94 Vertical Burn Rating Criteria**

| Criteria conditions | V0 | V1 | V2 |
|---|---|---|---|
| Afterflame time for each individual specimen $t_1$ or $t_2$ | ≤ 10s | ≤ 30s | ≤ 30s |
| Total afterflame time for any condition set ($t_1$ plus $t_2$ for the 5 specimens) | ≤ 50s | ≤ 250s | ≤ 250s |
| Afterflame plus afterglow time for each individual specimen after the second flame application ($t_2$+$t_3$) | ≤ 30s | ≤ 60s | ≤ 60s |
| Afterflame or afterglow of any specimen up to the holding clamp | No | No | No |
| Cotton indicator ignited by flaming particles or drops | No | No | Yes |

Bonding force/strength of the compositions evaluated herein may be determined in accordance with ISO 19095 using a TRI (Technology Rising from IWATE)-treatment metal surface treatment. The TRI-treatment method was developed by a Japan company.

Example and comparative compositions were prepared as set forth in Table 4:

**Table 4 - Example Compositions**

| Component | Unit | C1.1 | C1.2 | C1.3 | C1.4 | Ex1.5 | Ex1.6 |
|---|---|---|---|---|---|---|---|
| PBT195, low viscosity, 1200-211D | % | 22.3 | 22.3 | 25.3 | 23.3 | 22.3 | 22.8 |
| PBT315, high viscosity, 1100-211X | % | 10 | 10 | 10 | 10 | 10 | 12 |
| PC copolymer SLX90/10 | % | 3 | 3 | | 5 | 3 | 3 |
| ULTEM Polymer 1010 (PEI) | % | 5 | 5 | 5 | | 5 | 6 |
| LISIDE LFR-5005M (pre-blended phosphorous FR additive) | % | 15 | 15 | 15 | 17 | 15 | 16.5 |
| CPIC low Dk round glass fiber ECS303N-3-K/HL | % | 40 | | | | | |
| Nittobo flat glass fiber 3PA-830 | % | | 40 | 40 | 40 | | |
| CPIC low Dk flat glass fiber ECS303N-3-M3/HL | % | | | | | 40 | 35 |
| Lotader AX8900 (ethylene-acrylic ester-glycidyl methacrylate terpolymer) | % | 2 | 2 | 2 | 2 | 2 | 2 |
| Polyester ether elastomer | % | 1 | 1 | 1 | 1 | 1 | 1 |
| AClyn® 295A (ethylene-Acrylic Acid Zinc Ionomer) | % | 1 | 1 | 1 | 1 | 1 | 1 |
| Pentaerythritol tetrastearate | % | 0.2 | 0.2 | 0.2 | 0.2 | 0.2 | 0.2 |
| UV stabilizer UV234 | % | 0.3 | 0.3 | 0.3 | 0.3 | 0.3 | 0.3 |
| Antioxidant Irganox 1010 | % | 0.1 | 0.1 | 0.1 | 0.1 | 0.1 | 0.1 |
| Phosphite stabilizer Irgafos 168 | % | 0.1 | 0.1 | 0.1 | 0.1 | 0.1 | 0.1 |

Compositions C1.1-C1.4, Ex1.5 and Ex1.6 included from 35-40 wt% glass fiber (35-40%). Different glass fibers were used as the reinforcing agent, including a low Dk round glass fiber (C1.1), a flat shape E-glass fiber (C1.2-C1.4), and a flat shape low Dk glass fiber (Ex1.5 and Ex1.6). The effect of a PC copolymer (SLX90/10) (compare C1.3 to C1.2) and polyetherimide (PEI) (compare C1.4 to C1.2) was also evaluated. The phosphorous FR additive was used with a combination of impact modifiers (ethylene-acrylic ester-glycidyl methacrylate terpolymer (AX8900), polyester ether elastomer, and ionomer). The compositions did not include TSAN and were free of per-and polyfluoroalkyl substances (PFAS-free).

The physical, mechanical, dielectric, and FR performance of these compositions is shown in Table 5:

**Table 5 - Properties of Table 4 Compositions**

| Property | Test Conditions | Test Standard | Unit | C1.1 | C1.2 | C1.3 | C1.4 | Ex1.5 | Ex1.6 |
|---|---|---|---|---|---|---|---|---|---|
| Bonding force | TRI-treatment | ISO 19095 | MPa | 27.3 | 27.5 | 24.8 | 23.2 | 27.1 | 27.7 |
| MVR | 275 °C/5kg | ASTM D1238 | $cm^3$/ 10min | 9 | 13 | 25 | 12 | 13 | 13 |
| UL rating | 0.8 mm | UL 94 | / | V1 | V1 | V1 | V1 | V1 | V1 |
| | 0.8 mm, aged | UL 94 | / | V1 | V1 | V1 | V1 | V1 | V1 |
| Total flame time of 5 specimens | 0.8 mm | UL 94 | s | 66 | 63 | 63 | 39 | 63 | 50 |
| | 0.8 mm, aged | UL 94 | s | 106 | 47 | 58 | 46 | 66 | 70 |
| UL rating | 1.0 mm | UL 94 | / | V1 | V1 | V1 | V0 | V1 | **V1** |
| | 1.0 mm, aged | UL 94 | / | V1 | V1 | V1 | V0 | V1 | V1 |
| Total flame time of 5 specimens | 1.0 mm | UL 94 | s | 46 | 55 | 38 | 34 | 46 | 41 |
| | 1.0 mm, aged | UL 94 | s | 55 | 72 | 63 | 36 | 77 | 60 |
| Notched Izod | 25 °C, 5 lbf/ft | ASTM D256 | J/m | 103 | 113 | 104 | 103 | 140 | 134 |
| Notched Izod | -30 °C, 5 lbf/ft | ASTM D256 | J/m | 110 | 105 | 105 | 101 | 132 | 131 |
| Un-notched Izod | 25 °C, 5 lbf/ft | ASTM D256 | J/m | 715 | 741 | 732 | 604 | 728 | 804 |
| Notched Izod | 25 °C, 80*10*4 | ISO 180 | $kJ/m^2$ | 10.0 | 11.2 | 10.5 | 10.4 | 13.5 | 12.8 |
| HDT | 1.82 MPa/3.2mm | ASTM D648 | °C | 201 | 199 | 207 | 199 | 202 | 199 |
| HDT | 0.45 MPa/ 3.2mm | ASTM D648 | °C | 218 | 218 | 221 | 216 | 218 | 218 |
| Flexural Modulus | 3.2 mm, 1.27 mm/min | ASTM D790 | MPa | 11900 | 11500 | 11100 | 11500 | 11500 | 10200 |
| Flexural Strength | @break, 3.2 mm | ASTM D790 | MPa | 199 | 204 | 198 | 195 | 213 | 201 |
| Tensile Modulus | 5 mm/min | ASTM D638 | MPa | 13090 | 13960 | 13450 | 14020 | 13080 | 11680 |
| Tensile Strength | @ break | ASTM D638 | MPa | 128 | 131 | 123 | 122 | 141 | 130 |
| Tensile Elongation | @ break | ASTM D638 | % | 2.38 | 2.42 | 2.43 | 2.20 | 2.64 | 2.70 |
| Dk | 1.9 GHz | SABIC Method | / | 3.50 | 3.93 | 3.93 | 3.94 | 3.50 | 3.45 |
| Df | 1.9 GHz | SABIC Method | / | 0.0079 | 0.0089 | 0.0095 | 0.0086 | 0.0078 | 0.0077 |
| Dk | 5 GHz | SABIC Method | / | 3.49 | 3.95 | 3.94 | 3.95 | 3.52 | 3.47 |

(continued)

| Property | Test Conditions | Test Standard | Unit | C1.1 | C1.2 | C1.3 | C1.4 | Ex1.5 | Ex1.6 |
|---|---|---|---|---|---|---|---|---|---|
| Df | 5 GHz | SABIC Method | / | 0.0067 | 0.0080 | 0.0085 | 0.0078 | 0.0067 | 0.0066 |

The 'SABIC Method' for determining the Dk and dissipation factor (Df) includes measuring these values using a QWED split post dielectric resonator and an Agilent network analyzer. For the 1.9 GHz measurement, the minimum sample size is 70 mm × 70 mm with a maximum thickness of 4 mm. For the 5.0 GHz measurement, the minimum sample size is 30 mm × 30mm with a maximum thickness of 2mm.

Comparing C1.1, C1.2 and Ex1.5, when the glass fiber content was as high as 40%, the impact strength of the PBT based FR compositions was > 100 J/m. Interestingly, when a flat shape low Dk glass fiber was used (Ex1.5), impact strength of the sample was greatly increased to as high as 140 J/m (13.5 kJ/$m^2$), with a higher tensile elongation of 2.64%. Even when the loading of the low Dk glass fiber was decreased to 35% (in Ex1.6), impact strength of the sample was still high (134 J/m (12.8 kJ/$m^2$)). Additionally, each of these samples had high bonding force with metal (>27 MPa), robust thin-wall FR properties (V1 0.8 mm), and good mechanical performance.

Comparing C1.1 and Ex1.5, the inclusion of low Dk glass fibers resulted in a composition having good balance of Dk and modulus, with the flexural modulus higher than 11 GPa and Dk less than 3.5 at 1.9G Hz.

Comparing C1.2 to C1.3, the addition of a PC copolymer (SLX90/10) in C1.2 resulted in a composition with improved bonding force and impact strength while maintaining FR and other mechanical performance.

Comparing C1.2 to C1.4, the addition of polyetherimide (PEI) in C1.2 resulted in a composition with improved bonding and impact performance with a lower loading of FR additive. The C1.4 composition, however, was able to achieve a V0 rating at a 1.0 mm thickness, suggesting that a higher FR additive content could further improve FR performance. The compositions did not include TSAN as an anti-drip agent; as a result the compositions were PFAS-free.

In sum, compositions including the phosphorous FR as the FR additive, a high loading glass fiber as the filler, a PC copolymer (SLX resin), and an FR synergist (PEI), had good thin-wall FR performance, high bonding force, and good mechanical performance. Additionally, when a flat shape low Dk glass fiber was used, high impact strength was achieved (120 J/m or higher and up to 140 J/m).

Additional compositions were prepared according to Table 6; properties of the compositions are set forth in Table 7:

**Table 6 - Comparative and Example Compositions**

| Component | Unit | C2.1 | C2.2 | Ex2.3 | C2.4 | Ex2.5 |
|---|---|---|---|---|---|---|
| PBT195, low viscosity, 1200-211D | % | 22.8 | 21.8 | 16.8 | 16.8 | 16.8 |
| PBT315, high viscosity, 1100-211X | % | 16 | 14 | 15 | 15 | 15 |
| PC copolymer SLX90/10 | % | 5 | 5 | | | |
| ULTEM Polymer 1010 (PEI) | % | | | 17 | 17 | 17 |
| Clariant OP 1262 (pre-blended phosphorous FR additives) | % | 15 | 18 | 10 | 10 | |
| LISIDE LFR-5005M (pre-blended phosphorous FR additives) | % | | | | | 10 |
| CPIC low Dk round glass fiber ECS303N-3-K/HL | % | | | | 40 | |
| CPIC low Dk flat glass fiber ECS303N-3-M3/HL | % | 40 | 40 | 40 | | 40 |
| TSAN | % | 0.5 | 0.5 | 0.5 | 0.5 | 0.5 |
| Pentaerythritol tetrastearate | % | 0.2 | 0.2 | 0.2 | 0.2 | 0.2 |
| UV stabilizer UV234 | % | 0.3 | 0.3 | 0.3 | 0.3 | 0.3 |
| Antioxidant Irganox 1010 | % | 0.1 | 0.1 | 0.1 | 0.1 | 0.1 |
| Phosphite stabilizer Irgafos 168 | % | 0.1 | 0.1 | 0.1 | 0.1 | 0.1 |

**Table 7 - Properties of Table 8 Compositions**

| Property | Test Conditions | Test Standard | Unit | C2.1 | C2.2 | Ex2.3 | C2.4 | Ex2.5 |
|---|---|---|---|---|---|---|---|---|
| Bonding force | TRI-treatment | ISO 19095 | MPa | 29.9 | 27.5 | 31.5 | 31.6 | 28.6 |
| MVR | 275°C/5kg | ASTM D1238 | $cm^3$/ 10min | 31 | 29 | 31 | 17 | 25 |
| UL rating | 1.0 mm | UL 94 | / | V1 | V0 | V0 | V0 | V0 |
| | 1.0 mm, aged | UL 94 | / | V1 | V0 | V0 | V0 | V0 |
| Total flame | 1.0 mm | UL 94 | s | 56 | 26 | 30 | 41 | 23 |
| time of 5 specimens | 1.0 mm, aged | UL 94 | s | 48 | 25 | 31 | 25 | 22 |
| Notched Izod | 25 °C, 5 lbf/ft | ASTM D256 | J/m | 108 | 103 | 135 | 114 | 125 |
| Notched Izod | -30 °C, 5 lbf/ft | ASTM D256 | J/m | 105 | 107 | 124 | 107 | 127 |
| Un-notched Izod | 25 °C, 5 lbf/ft | ASTM D256 | J/m | 718 | 636 | 827 | 749 | 777 |
| Notched Izod | 25 °C, 80x10x4 | ISO 180 | $kJ/m^2$ | / | / | 13.6 | 11.5 | 12.7 |
| HDT | 1.82 MPa/3.2 mm | ASTM D648 | °C | 200 | 200 | 196 | 193 | 195 |
| Flexural Modulus | 3.2 mm, 1.27 mm/min | ASTM D790 | MPa | 11900 | 12000 | 12000 | 11500 | 12400 |
| Flexural Strength | @break, 3.2 mm | ASTM D790 | MPa | 206 | 195 | 239 | 206 | 230 |
| Tensile Modulus | 5 mm/min | ASTM D638 | MPa | 13470 | 13440 | 13590 | 13130 | 13950 |
| Tensile Strength | @ break | ASTM D638 | MPa | 132 | 127 | 166 | 151 | 166 |
| Tensile Elongation | @ break | ASTM D638 | % | 2.30 | 2.27 | 2.39 | 2.24 | 2.40 |
| Dk | 1.9 GHz | SABIC Method | / | / | 3.52 | 3.54 | 3.56 | 3.61 |
| Df | 1.9 GHz | SABIC Method | / | / | 0.0057 | 0.0066 | 0.0074 | 0.0071 |
| Dk | 5 GHz | SABIC Method | / | / | 3.55 | 3.53 | 3.53 | 3.55 |
| Df | 5 GHz | SABIC Method | / | / | 0.0054 | 0.0061 | 0.0066 | 0.0064 |

The Table 6 compositions were developed in an attempt to demonstrate V0 FR performance. The impact modifiers were removed due to their adverse effect on impact performance. Compositions Ex2.3, C2.4 and Ex2.5 included a phosphorous FR as the FR additive, a high loading of PEI as the FR synergist, and a low Dk glass fiber as the filler. As shown, the compositions had good V0 FR performance at 1.0 mm and good mechanical performance. Compositions C2.1 and C2.2 included a higher loading of FR additive. The compositions included TSAN to improve V0 FR performance to prevent dripping during the flame test, so these compositions were not PFAS-free.

Comparing C2.1 and C2.2, when a high loading of phosphorous FR (OP1262 used) was used, the compositions could achieve a V0 FR rating at 1.0 mm, however, impact strength of the compositions was low (108 J/m and 103 J/m), even when a flat shape low Dk glass fiber was used for the filler.

Comparing Ex2.3 and C2.2, when a high loading of PEI was used as the FR synergist to reduce the content of the phosphorous FR, impact strength of the composition can be greatly improved to 135 J/m (13.6 $kJ/m^2$) and a V0 FR rating at 1.0 mm was maintained. Additionally, the tensile and flexural strength of the composition was much higher than that of the

control. Bonding force was also increased (31.5 MPa vs. 27.5 MPa).

Comparing C2.4 and Ex2.3, use of a flat shape low Dk glass fiber provided much better impact performance than a round glass fiber (135 J/m vs. 114 J/m). The two glass fibers had similar FR and bonding performance.

Comparing Ex2.5 and Ex2.3 with the two different phosphorous FR additives, both compositions had good FR properties (V0 at 1.0 mm), a high bonding force (>28 MPa), and good mechanical performance (notched Izod > 120 J/m).

In sum, using a relatively low loading of phosphorous FR additive and a high content of PEI as the FR synergist, the glass fiber filled compositions had good thin-wall FR performance (V0 up to 1.0mm), a high bonding force (> 28MPa), and very good mechanical performance (notched Izod up to 135 J/m).

Considering all of the data, it was found that PBT-based FR compositions with thin-wall flame retardancy, and good mechanical performance could be prepared. Using a phosphorous FR as the FR additive (e.g., ADP in combination with MPP, and in particular a pre-blended FR additive including these components) and PEI as an FR synergist, glass fiber filled PBT compositions had good FR and impact performance (> 100 J/m). With impact modifiers included in the compositions, a V1 FR rating at 0.8 mm was achieved by optimizing the loading of the FR additive and PEI. No TSAN was needed for V1 performance, allowing these compositions to be PFAS-free. With the impact modifiers removed, and by using high loading of PEI, a V0 FR rating at 1.0 mm was achieved. Additionally, when a flat shape low Dk glass fiber was used as the reinforcing agent, the compositions had substantially improved impact performance, with notched Izod impact strength up to 140 J/m for V1 FR performance and 135 J/m for V0 performance. The compositions also had good bonding force with metal (>27 MPa for a TRI-treatment method). Compositions according to aspects of the disclosure are good candidates for electronic and auto related application areas where FR materials are required.

The above description is intended to be illustrative, and not restrictive. For example, the above-described examples (or one or more aspects thereof) may be used in combination with each other. Other aspects can be used, such as by one of ordinary skill in the art upon reviewing the above description. The Abstract is provided to comply with 37 C.F.R. § 1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed aspect. Thus, the following claims are hereby incorporated into the Detailed Description as examples or aspects, with each claim standing on its own as a separate aspect, and it is contemplated that such aspects can be combined with each other in various combinations or permutations. The scope of the disclosure should be determined with reference to the appended claims, along with the full scope of equivalents to which such claims are entitled.

## Claims

1. A thermoplastic composition comprising:

   (a) from about 20 wt% to about 60 wt% of a polybutylene terephthalate (PBT) component;
   (b) from about 3 wt% to about 30 wt% of a polyetherimide (PEI) component;
   (c) from about 5 wt% to about 25 wt% of a phosphorous flame retardant (FR) component; and
   (d) from about 10 wt% to about 50 wt% of a low Dk flat glass fiber,

   wherein the combined weight percent value of all components does not exceed 100 wt%, and all weight percent values are based on the total weight of the composition.

2. The thermoplastic composition according to claim 1, wherein the low Dk flat glass fiber has a Dk of less than 5 at a frequency of 1 gigahertz (GHz).

3. The thermoplastic composition according to claim 1 or 2, wherein the low Dk flat glass fiber has an aspect ratio of at least 2.

4. The thermoplastic composition according to any of claims 1 to 3, wherein the phosphorous FR component comprises aluminum diethylphosphinate (ADP), melamine polyphosphate (MPP), or a combination thereof.

5. The thermoplastic composition according to claim 4, wherein the phosphorous FR component comprises ADP and MPP.

6. The thermoplastic composition according to claim 5, wherein the ADP and MPP are included in phosphorous FR

component in a form of a pre-blended FR composition.

**7.** The thermoplastic composition according to any of claims 1 to 6, wherein the composition further comprises from about 0.1 wt% to about 10 wt% of an impact modifier component.

**8.** The thermoplastic composition according to claim 7, wherein the impact modifier component comprises an ethylene-acrylic ester-glycidyl methacrylate terpolymer, an ethylene-glycidyl methacrylate copolymer, an acrylate-based ionomer, a sulfonate-based ionomer, a polyester ether elastomer, styrene-ethylene-butylene-styrene (SEBS), or a combination thereof.

**9.** The thermoplastic composition according to claim 7, wherein the impact modifier component comprises an ethylene-acrylic ester-glycidyl methacrylate terpolymer, a polyester ether elastomer, an ethylene-acrylic acid zinc ionomer, or a combination thereof.

**10.** The thermoplastic composition according to any of claims 1 to 9, wherein the composition further comprises from about 0.1 wt% to about 10 wt% of a polycarbonate copolymer component comprising polycarbonate units and isophthalate-terephthalate-resorcinol (ITR) ester units.

**11.** The thermoplastic composition according to any of claims 1 to 10, wherein the composition further comprises from about 0.1 wt% to about 3 wt% of at least one additional additive comprising an acid scavenger, an anti-drip agent, an antioxidant, an antistatic agent, a chain extender, a colorant, a release agent, a flow promoter, a lubricant, a plasticizer, a quenching agent, a flame retardant, a UV reflecting additive, an impact modifier, a blowing agent, a reinforcing agent, or a combination thereof.

**12.** The thermoplastic composition according to any of claims 1 to 11, wherein the composition is free of per-and polyfluoroalkyl substances (PFAS-free).

**13.** The thermoplastic composition according to any of claims 1 to 12, wherein the composition has:

a UL94 flame retardancy rating of V0 or V1 at a thickness of 0.8 millimeter (mm) or 1.0 mm;
a notched Izod impact strength of at least 100 joules per meter (J/m) as tested in accordance with ASTM D256 at 25 °C and 5 pound-force per foot (lbf/ft), or
a metal bonding force of at least 20 megapascals (MPa) as tested in accordance with ISO 19095 using a TRI-treatment.

**14.** A method of forming a thermoplastic composition comprising (a) from about 20 wt% to about 60 wt% of a polybutylene terephthalate (PBT) component, (b) from about 3 wt% to about 30 wt% of a polyetherimide (PEI) component, (c) from about 5 wt% to about 25 wt% of a phosphorous flame retardant (FR) component comprising aluminum diethylphosphinate (ADP) and melamine polyphosphate (MPP), and (d) from about 10 wt% to about 50 wt% of a low Dk flat glass fiber, the method comprising:

combining, to form a mixture, components (a)-(d); and
extruding and/or molding the mixture to form the composition,
wherein the combined weight percent value of all components does not exceed 100 wt%, and all weight percent values are based on the total weight of the composition, and
wherein the phosphorous flame retardant (FR) component (c) is combined with components (a), (b) and (d) as a pre-blended composition comprising the ADP and the MPP.

**15.** A thermoplastic composition formed according to a process comprising:

combining, to form a mixture, (a) from about 20 wt% to about 60 wt% of a polybutylene terephthalate (PBT) component, (b) from about 3 wt% to about 30 wt% of a polyetherimide (PEI) component, (c) from about 5 wt% to about 25 wt% of a phosphorous flame retardant (FR) component comprising aluminum diethylphosphinate (ADP) and melamine polyphosphate (MPP), and (d) from about 10 wt% to about 50 wt% of a low Dk flat glass fiber; and
extruding and/or molding the mixture to form the composition,
wherein the combined weight percent value of all components does not exceed 100 wt%, and all weight percent values are based on the total weight of the composition, and
wherein the phosphorous flame retardant (FR) component (c) is combined with components (a), (b) and (d) as a

pre-blended composition comprising the ADP and the MPP.

Aspect Ratio of Glass Fiber

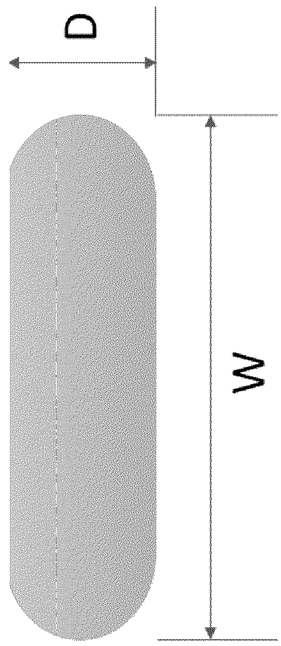


Cross section of the glass fiber

FIG. 1

Europäisches Patentamt
European Patent Office
Office européen des brevets

# EUROPEAN SEARCH REPORT

Application Number
EP 24 15 6209

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2010/168290 A1 (DING TIANHUA [US] ET AL) 1 July 2010 (2010-07-01)<br>* example E2; table 2 *<br>* paragraph [0052] *<br>----- | 1-15 | INV.<br>C08L67/02 |
| Y | US 2023/303833 A1 (CHENG YUNAN [CN] ET AL) 28 September 2023 (2023-09-28)<br>* figures 5,6; examples 2.1-2.5; tables 2-1,2-2 *<br>* figures 1,2; examples 1.1-1.5; tables 1-1,1-2 *<br>* paragraphs [0064] - [0066] *<br>----- | 1-15 | |
| A | US 2009/036578 A1 (ELANGO SOMASUNDARAM [IN] ET AL) 5 February 2009 (2009-02-05)<br>* example 6; tables 2,3 *<br>----- | 1-15 | |

TECHNICAL FIELDS SEARCHED (IPC)

C08L

The present search report has been drawn up for all claims

1

| Place of search | Date of completion of the search | Examiner |
|---|---|---|
| The Hague | 25 June 2024 | Schlicke, Benedikt |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.....
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 24 15 6209

This annex lists the patent family members relating to the patent documents cited in the above-mentioned European search report. The members are as contained in the European Patent Office EDP file on The European Patent Office is in no way liable for these particulars which are merely given for the purpose of information.

25-06-2024

| Patent document cited in search report | Publication date | Patent family member(s) | Publication date |
|---|---|---|---|
| US 2010168290 A1 | 01-07-2010 | CN 102317373 A | 11-01-2012 |
| | | EP 2370517 A1 | 05-10-2011 |
| | | JP 5501374 B2 | 21-05-2014 |
| | | JP 2012514113 A | 21-06-2012 |
| | | KR 20110119625 A | 02-11-2011 |
| | | US 2010168290 A1 | 01-07-2010 |
| | | WO 2010078140 A1 | 08-07-2010 |
| US 2023303833 A1 | 28-09-2023 | CN 116323802 A | 23-06-2023 |
| | | EP 3957680 A1 | 23-02-2022 |
| | | EP 4196525 A1 | 21-06-2023 |
| | | JP 2023538057 A | 06-09-2023 |
| | | KR 20230053656 A | 21-04-2023 |
| | | US 2023303833 A1 | 28-09-2023 |
| | | WO 2022038517 A1 | 24-02-2022 |
| US 2009036578 A1 | 05-02-2009 | US 2009036578 A1 | 05-02-2009 |
| | | WO 2009009249 A2 | 15-01-2009 |

EPO FORM P0459

For more details about this annex : see Official Journal of the European Patent Office, No. 12/82